# FASCICULE DE BREVET EUROPEEN

(11) **EP 2 699 074 B1**
(45) Date de publication et mention de la délivrance du brevet: **31.07.2019**
(21) Numéro de dépôt: 12720247.1
(22) Date de dépôt: 05.04.2012
(51) Int. Cl.: A01B 73/04, A01B 73/06, A01D 75/30, A01D 34/66

(54) **MACHINE AGRICOLE AVEC UN DISPOSITIF DE REPLIAGE PERFECTIONNE**
LANDWIRTSCHAFTLICHE MASCHINE MIT VERBESSERTER FALTVORRICHTUNG
AGRICULTURAL MACHINE WITH IMPROVED FOLDING DEVICE

(30) Priorité: 21.04.2011 FR 1153453
(43) Date de publication de la demande: 26.02.2014
(73) Titulaire: KUHN S.A., 67700 Saverne (FR)
(72) Inventeur: HALTER, Cédric, 67310 Wasselonne (FR); WILHELM, Joël, 57820 Saint-Louis (FR)
(86) Numéro de dépôt international: PCT/FR2012/050741
(87) Numéro de publication internationale: WO 2012/143641

(56) Documents cités:
- WO-A1-91/03922
- DE-A1-102006 019 032
- US-A- 3 536 144
- US-A- 4 074 765
- US-A- 5 052 495

## Description

La présente invention se rapporte à une machine agricole comportant :
- un bâti central conçu pour être raccordé à un tracteur afin d'être tracté par celui-ci, et muni de roues en contact avec le sol,
- deux dispositifs de travail chacun relié au bâti central par une première articulation et pouvant être déplacé entre une position de transport dans laquelle chacun s'étend dans un plan sensiblement parallèle au sens d'avance de la machine, et une position de travail dans laquelle chacun s'étend dans un plan sensiblement perpendiculaire au sens d'avance de la machine.

Le document WO 91/03922 décrit un machine agricole pour le travail du sol, qui comporte un bâti central muni de roues et deux bâtis latéraux, repliables vers l'arrière en position de transport. Les roues du bâti central ne sont pas en contact avec le sol lorsque la machine se trouve en position de transport.

Une machine agricole du type faucheuse traînée, comprenant un bâti tractable sur lequel sont articulés deux dispositifs de fauchage, est connue d'après le document EP 1 616 474 A1. Le bâti est conçu pour être raccordé à un tracteur afin d'être tracté par celui-ci, et est muni de roues au sol. Les dispositifs de fauchage sont montés sur une articulation respectivement de chaque côté respectif du châssis afin de basculer dans un plan horizontal s'étendant latéralement entre une position de travail et une position de transport.

A cet effet, chacun des dispositifs de fauchage comprend un cadre porteur et une potence, le cadre porteur étant relié à la potence par une articulation d'axe sensiblement parallèle au sens d'avance de la machine lorsque le dispositif de fauchage est déplié dans la position de travail. La potence est reliée au bâti par un dispositif d'articulation comprenant d'une part une articulation dont l'axe est sensiblement parallèle au sens d'avance de la machine lorsque le dispositif de fauchage est déplié dans la position de travail, d'autre part une articulation dont l'axe est sensiblement vertical, les articulations du dispositif d'articulation étant situées à proximité l'une de l'autre. Le dispositif d'articulation est positionné sur l'extrémité avant du bâti.

Pour être déplacé de la position de travail vers la position de transport, chacun des dispositifs de fauchage dans la position de travail est tout d'abord relevé verticalement au moyen de la potence, puis chacun des dispositifs de fauchage est déplacé vers l'arrière dans un plan horizontal au moyen de l'articulation à axe sensiblement vertical située sur l'extrémité avant du bâti, avant d'être abaissé pour venir reposer sur un élément de butée.

La faucheuse précédemment décrite présente un certain nombre d'inconvénients.

Premièrement, la largeur de la machine, lorsque les dispositifs de fauchage sont repliés dans la position de transport, demeure relativement importante. En effet, lorsque chacun des dispositifs de fauchage est dans la position de travail, il se présente suivant une vue latérale de la machine comme un ensemble sensiblement parallélépipédique dont la dimension horizontale est plus importante que la dimension verticale. Lorsque chacun des dispositifs de fauchage est dans la position de transport, la largeur totale de la machine est au moins égale à la somme desdites dimensions horizontales et se révèle donc être importante. Deuxièmement, en définissant la largeur de fauchage d'un dispositif de fauchage dans la position de travail, comme étant la dimension de la partie fauchée mesurée suivant une direction perpendiculaire au sens d'avance de la machine, le fait d'augmenter la largeur de fauchage d'une certaine quantité induit un accroissement d'une quantité sensiblement égale de la longueur totale de la machine lorsque le dispositif de fauchage est dans la position de transport. Cet accroissement vient gêner la maniabilité de la machine.

Troisièmement, l'équilibre de la machine au travail impose que dans cette position, les roues au sol soient positionnées derrière les dispositifs de travail, ce qui détermine à une valeur relativement importante l'empattement défini par la distance entre l'axe de rotation des roues au sol et l'axe de rotation des roues arrière du tracteur. Or, comme le bâti présente une géométrie fixe, cet empattement est constant quelle que soit la position de la machine. Ainsi, en position de transport, l'empattement relativement important vient gêner la maniabilité de la machine en virage.

Quatrièmement, les dispositifs de travail, dans la position de transport, s'étendent à une certaine distance au-dessus d'un plan horizontal situé au-dessus des roues au sol, ce qui élève le centre de gravité de la machine et augmente donc son instabilité au transport.

La présente invention a pour but une machine agricole munie d'un bâti central articulé auquel sont reliés des dispositifs de travail, le bâti central et les dispositifs de travail étant conçus de façon à éviter les inconvénients précités.

A cet effet, l'invention propose une machine agricole avec les caractéristiques de la revendication 1. Une importante caractéristique de l'invention consiste en ce que le bâti central se compose d'une partie avant, d'une partie arrière avec les roues et d'un dispositif d'articulation. Le dispositif d'articulation relie la partie avant et la partie arrière et peut pivoter, à l'aide d'un dispositif de déplacement, dans un plan sensiblement vertical et sensiblement parallèle au sens d'avance de la machine par rapport à ladite partie avant et par rapport à ladite partie arrière. De plus, chacun des dispositifs de travail est relié au dispositif d'articulation par une première articulation dont l'axe s'étend dans un plan sensiblement vertical et sensiblement parallèle au sens d'avance de la machine. En sus, dans ledit plan et dans la position de transport, l'axe de la première articulation présente une inclinaison vers le sol suivant une direction opposée au sens d'avance, et dans la position de transport, chaque dispositif de travail est replié vers l'arrière autour de la première articulation correspondante.

Dans la position de travail, chacun des dispositifs de travail peut pivoter autour de la première articulation correspondante de manière à bien suivre les dénivellations du sol. Dans la position de transport, le dispositif d'articulation est abaissé et rapproché de la partie avant, ce qui permet de déplacer le centre de gravité du bâti central vers l'avant et vers le sol. Le déplacement du dispositif d'articulation combiné au repliement vers l'arrière des dispositifs de travail, rend la machine en position de transport relativement compacte en longueur. De plus, les roues sont plus proches des roues arrière du tracteur que dans la position de travail, ce qui améliore la maniabilité de la machine en virage, facilite l'entrée de parcelle, et rend superflu le recours à un train de roues directionnel.

Une autre caractéristique importante de l'invention consiste en ce que chacun des dispositifs de travail comprend un dispositif de liaison à géométrie variable. Cette propriété contribue à réduire la longueur de la machine dans la position de transport. En sus, la machine s'utilisant de préférence en combinaison avec une machine frontale, cette propriété assure un recouvrement entre la largeur de travail de la machine frontale et les largeurs de travail respectives des dispositifs de travail.

D'autres caractéristiques et avantages de l'invention ressortiront de la description ci-après avec référence aux dessins annexés qui représentent, à titre d'exemple non limitatif, plusieurs formes de réalisation de la machine agricole selon l'invention.

Sur ces dessins :
- la figure 1 représente une vue de côté d'une première variante de réalisation de la machine selon l'invention, en position de travail et attelée à un tracteur,
- la figure 2 représente une vue de dessus de la première variante de réalisation de la machine en position de travail, l'élément de travail à gauche de la vue étant partiellement représenté,
- la figure 3 représente une vue de face partielle de la première variante de réalisation de la machine en position de travail,
- la figure 4 représente une vue de face partielle de la première variante de réalisation de la machine en position de transport,
- la figure 5 représente une vue de côté de la première variante de réalisation de la machine en position de transport,
- la figure 6 représente une coupe partielle de la première variante de réalisation de la machine en position de travail suivant la coupe VI-VI de la figure 2,
- la figure 7 représente une coupe partielle de la première variante de réalisation de la machine en position de transport suivant la coupe VII-VII de la figure 2,
- la figure 8 représente à une plus grande échelle une vue partielle en perspective de la première variante de réalisation de la machine en position de travail,
- la figure 9 représente à une plus grande échelle une vue partielle en perspective de la première variante de réalisation de la machine en position de travail,
- la figure 10 représente une coupe partielle d'une deuxième variante de réalisation de la machine en position de travail suivant la coupe X-X de la figure 2,
- la figure 11 représente une coupe partielle d'une troisième variante de réalisation de la machine en position de travail suivant la coupe XI-XI de la figure 2,
- la figure 12 représente une vue de côté d'une quatrième variante de réalisation de la machine selon l'invention, en position de travail,
- la figure 13 représente une vue de côté d'une cinquième variante de réalisation de la machine selon l'invention, en position de travail,
- la figure 14 représente une vue de côté d'une sixième variante de réalisation de la machine selon l'invention, en position de travail,
- la figure 15 représente une vue de face d'un mode de réalisation du dispositif de liaison, en position de travail,
- la figure 16 représente une vue de face d'un mode de réalisation du dispositif de liaison, en position de travail,
- la figure 17 représente une vue de face d'un mode de réalisation du dispositif de liaison, en position de travail.

On notera que la machine selon l'invention présente une symétrie suivant un plan vertical parallèle au sens d'avance. Certains des dessins annexés ne font apparaître qu'une partie de la machine, et il est bien entendu que les parties non figurées possèdent les mêmes caractéristiques que celles représentées avec lesquelles elles entretiennent la relation de symétrie susmentionnée. Dans un but de simplification, les éléments symétriques sont désignés par le même numéro de repère.

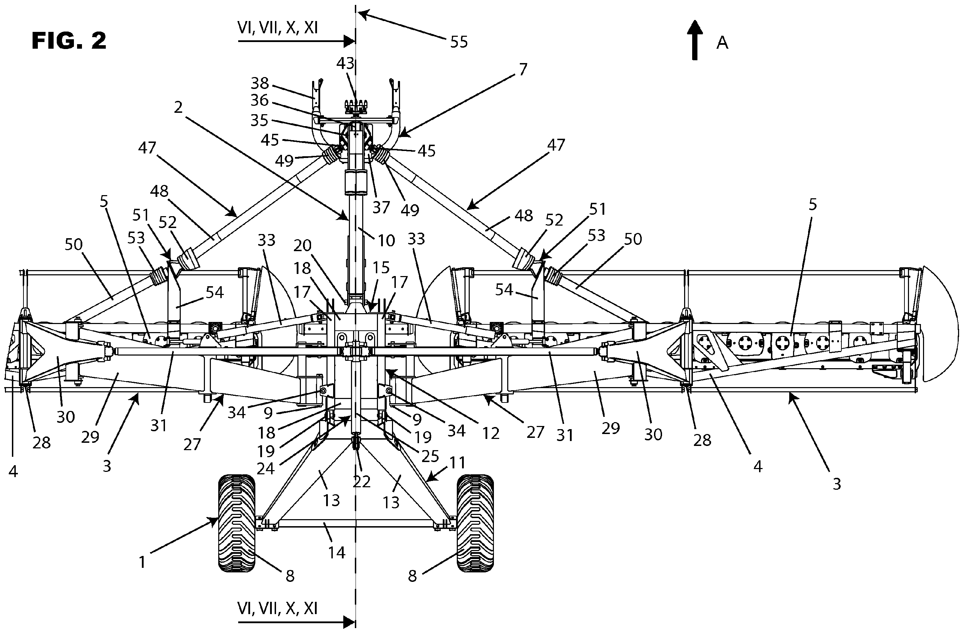

Ainsi qu'il ressort de la figure 2, la machine agricole (1) selon l'invention comporte un bâti central (2) et deux dispositifs de travail (3) comprenant chacun un cadre porteur (4) supportant au moins un membre de travail (5), les dispositifs de travail (3) étant placés de manière sensiblement symétrique de part et d'autre du bâti central (2) par rapport à un plan (55) orienté verticalement et parallèlement au sens d'avance (A). Le bâti central (2) est raccordé à un tracteur (6) afin d'être tracté par celui-ci au moyen d'un dispositif d'accouplement (7). Le bâti central (2) est par ailleurs supporté au sol par un train de roues comportant au moins deux roues (8).

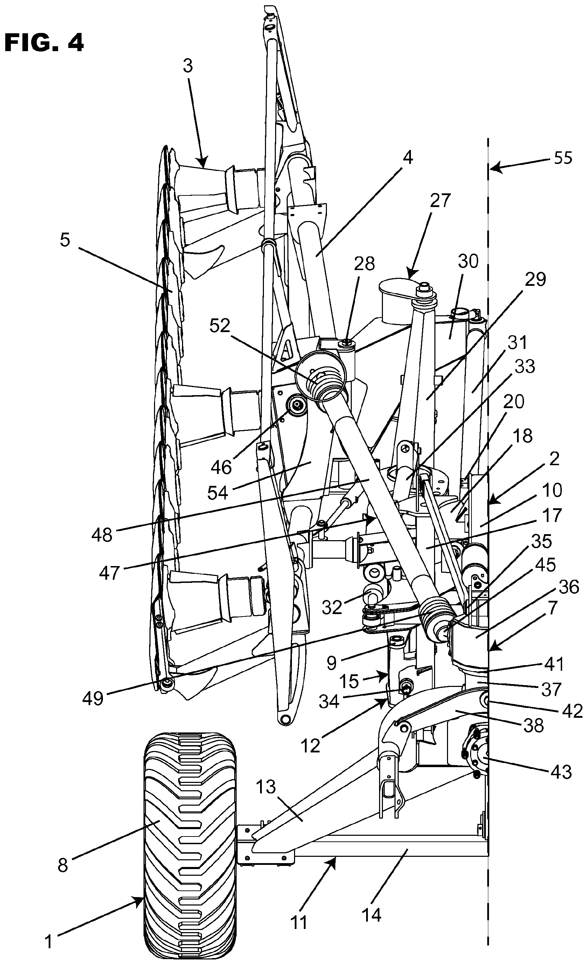

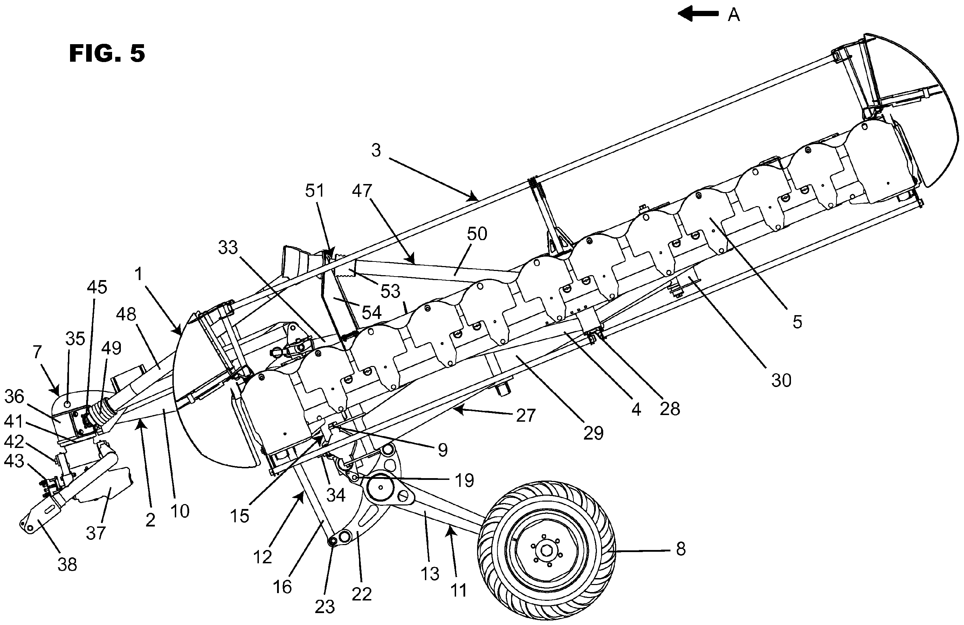

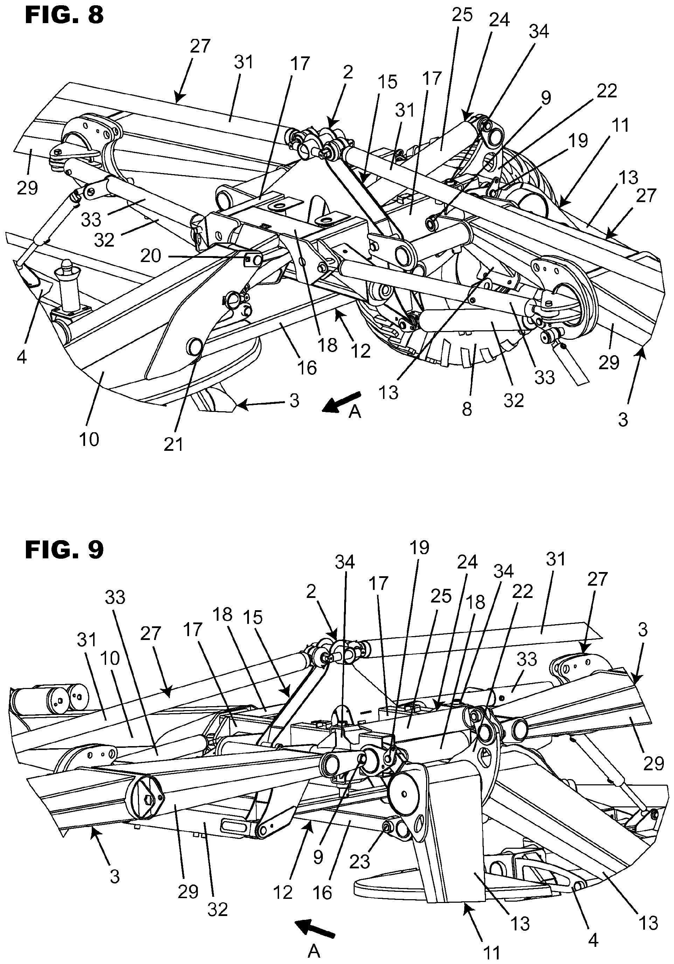

Chaque dispositif de travail (3) est relié au bâti central (2) par une première articulation (9), bien visible sur les figures 2 et 9, et les premières articulations (9) sont placées de manière sensiblement symétrique de part et d'autre du plan (55). Les premières articulations (9) se comportent comme des liaisons pivot. Chaque dispositif de travail (3) peut être déplacé entre une position de transport dans laquelle chacun s'étend dans un plan sensiblement parallèle au sens d'avance (A), ainsi que montré sur les figures 4 et 5, et une position de travail dans laquelle chacun s'étend dans un plan sensiblement perpendiculaire au sens d'avance (A), ainsi que montré à la figure 2.

Une caractéristique essentielle de l'invention réside dans le fait que le bâti central (2) se compose d'une partie avant (10), d'une partie arrière (11) et d'un dispositif d'articulation (12). La partie avant (10) est reliée au dispositif d'accouplement (7) qui est détaillé plus loin dans la présente description. La partie avant (10) se présente comme un membre allongé formé par un assemblage mécano-soudé de tubes et de tôles de renfort. La partie arrière comporte un assemblage mécano-soudé en forme de V constitué de deux bras (13) s'étendant vers l'arrière. Les extrémités inférieures des bras (13) viennent supporter un essieu (14) sensiblement perpendiculaire au sens d'avance (A) aux extrémités duquel les roues (8) en contact avec le sol sont montées en liaison pivot.

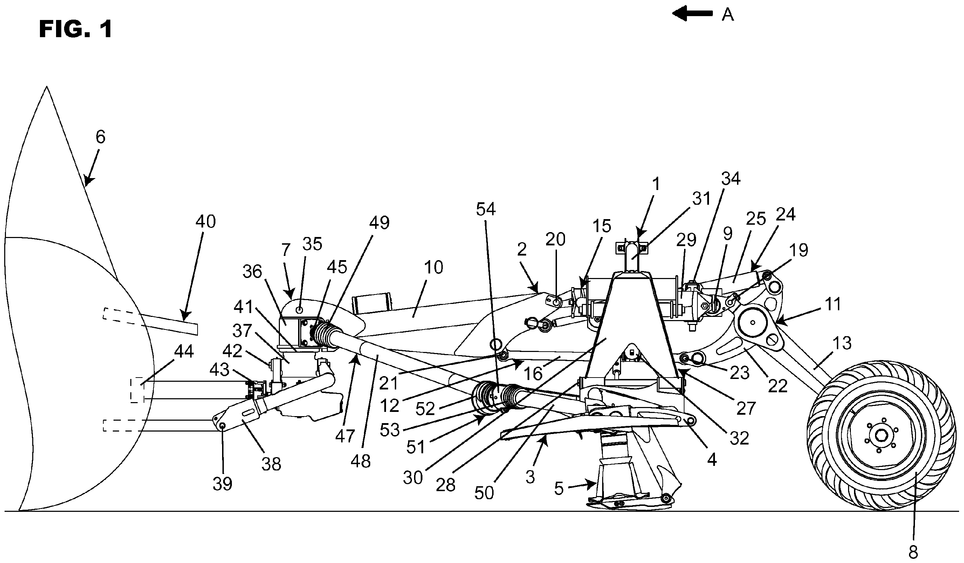

Dans une première variante de réalisation de la machine (1), illustrée par les figures 1 à 9, le dispositif d'articulation (12) se compose d'une bielle supérieure (15) et d'une bielle inférieure (16) reliant la partie avant (10) et la partie arrière (11) et formant un quadrilatère déformable dans un plan sensiblement vertical et sensiblement parallèle au sens d'avance (A). Les bielles (15, 16) sont sensiblement parallèles entre elles. La bielle supérieure (15) est formée par un assemblage mécano-soudé de tubes longitudinaux (17) et de tubes transversaux (18) formant un caisson auquel sont soudées des extensions servant de support à des articulations. Ainsi, la bielle supérieure (15) est articulée aux dispositifs de travail (3) par les premières articulations (9), lesquelles sont positionnées sur les parties latérales des tubes longitudinaux (17). Les premières articulations (9) présentent un axe qui s'étend dans un plan sensiblement vertical et sensiblement parallèle au sens d'avance (A). Par ailleurs, la bielle supérieure (15) est reliée aux extrémités supérieures des bras (13) par deux articulations (19) dont les axes s'étendent dans une direction sensiblement perpendiculaire au sens d'avance (A). Enfin, la bielle supérieure (15) est reliée à la partie avant (10) par une articulation (20) dont l'axe s'étend dans une direction sensiblement perpendiculaire au sens d'avance (A). La bielle inférieure (16) se présente comme une barre dont l'extrémité avant est reliée à la partie avant (10) par une articulation (21) dont l'axe s'étend dans une direction sensiblement perpendiculaire au sens d'avance (A). Aux extrémités supérieures des bras (13) et entre elles est soudée une tôle de liaison (22) sensiblement plane en forme d'arc. L'extrémité arrière de la bielle inférieure (16) est reliée à l'extrémité inférieure de la tôle de liaison (22) par une articulation (23) dont l'axe s'étend dans une direction sensiblement perpendiculaire au sens d'avance (A).

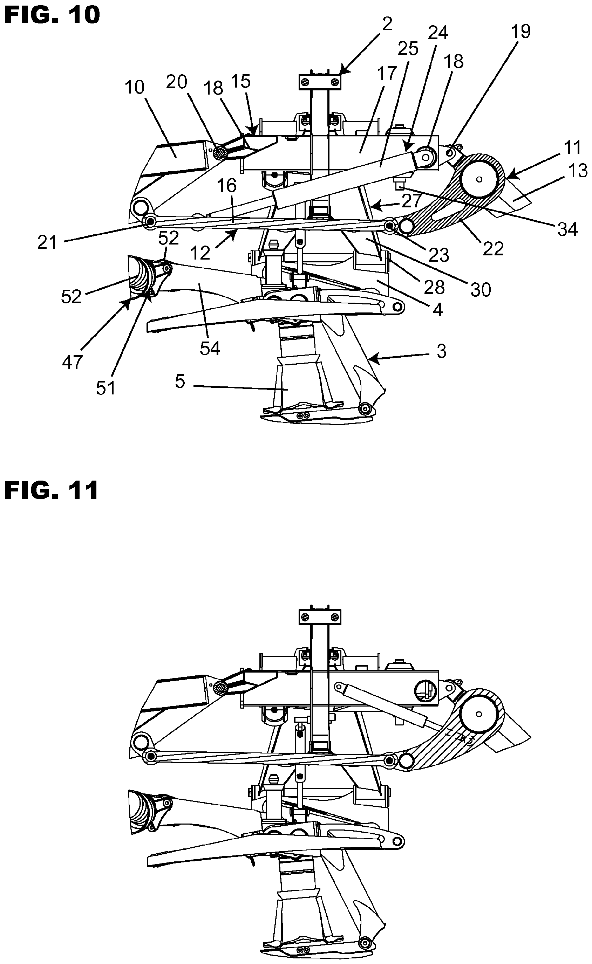

Le quadrilatère peut être déformé au moyen d'un dispositif de déplacement (24). Dans la première variante de réalisation de la machine (1), illustrée par les figures 1 à 9, le dispositif de déplacement (24) est formé par un dispositif à longueur variable (25) articulé entre la partie avant (10) et la partie arrière (11). Une deuxième variante de réalisation de la machine ainsi qu'une troisième se distinguent de la première par le fait que le dispositif à longueur variable (25) est articulé d'une manière différente. En effet, dans le deuxième exemple de réalisation illustré par la figure 10, le dispositif à longueur variable (25) est articulé entre la bielle supérieure (15) et la bielle inférieure (16). Dans le troisième exemple de réalisation illustré par la figure 11, le dispositif à longueur variable (25) est articulé entre l'une des bielles (15, 16) et le bâti central (2), c'est-à-dire entre l'une des bielles (15, 16) et la partie avant (10) ou bien l'une des bielles (15, 16) et la partie arrière (11).

Dans les première, deuxième et troisième variantes de réalisation susmentionnées, le dispositif à longueur variable (25) peut être un vérin hydraulique.

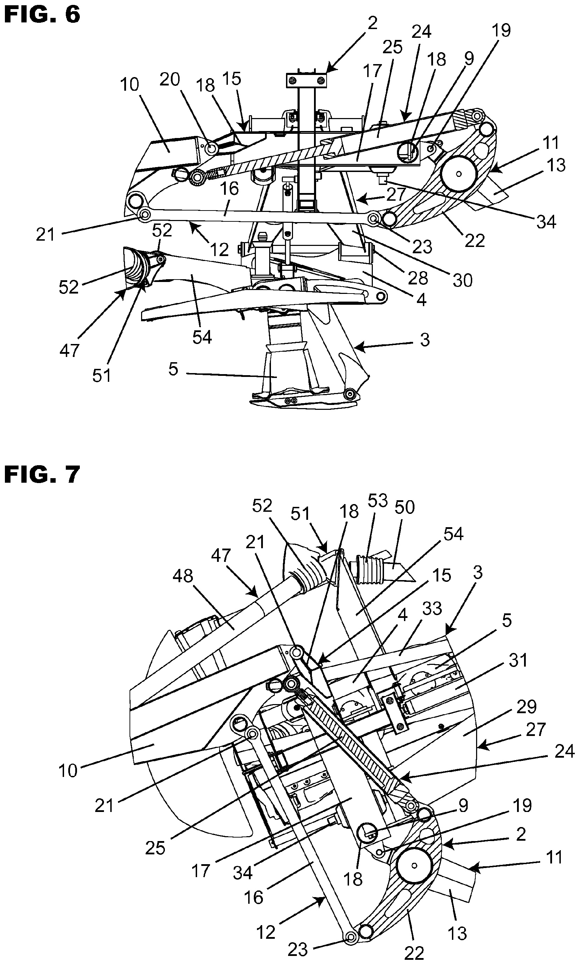

Dans la position de travail, il ressort des figures 1 et 6 que la bielle supérieure (15) et la bielle inférieure (16) sont sensiblement horizontales. Le dispositif à longueur variable (25) présente une longueur maximale. Les roues (8) sont positionnées derrière les dispositifs de travail (3). Chacun des dispositifs de travail (3) peut pivoter autour de la première articulation (9) correspondante de manière à suivre les dénivellations du sol.

Dans la position de transport, le dispositif à longueur variable (25) présente une longueur minimale. Les figures 5 et 7 montrent que la bielle supérieure (15) et la bielle inférieure (16) sont abaissées et rapprochées de la partie avant (10). Les extrémités arrière desdites bielles (15, 16) sont déplacées dans le sens d'avance (A) et rapprochées du sol. Comme les axes des premières articulations (9) sont de préférence disposés vers l'arrière desdites bielles (15, 16), ils sont aussi déplacés dans le sens d'avance (A) et rapprochés du sol. Les axes des premières articulations (9) présentent alors une inclinaison vers le sol suivant une direction opposée au sens d'avance (A). Les dispositifs de travail (3) sont rabattus vers l'arrière autour des premières articulations (9). Ils peuvent ainsi s'étendre partiellement au-dessus des roues (8). Ces caractéristiques améliorent la stabilité de la machine car elles permettent de rapprocher les extrémités avant des dispositifs de travail (3) de l'avant de la machine (1) et du sol. Lorsque chacun des dispositifs de travail (3) est dans la position de travail, l'ensemble formé par le cadre porteur (4) et le membre de travail (5) présente suivant une vue latérale de la machine (1) une dimension horizontale plus importante que la dimension verticale. Un avantage procuré par l'inclinaison susmentionnée de l'axe des premières articulations (9), combinée au rabattement des dispositifs de travail (3) vers l'arrière autour des premières articulations (9), réside dans le fait qu'au transport, l'encombrement total de la machine (1) dans une direction perpendiculaire au sens d'avance (A) est au moins égal à la somme desdites dimensions verticales, laquelle est inférieure à la somme desdites dimensions horizontales. Cette caractéristique apparaît notamment à la figure 4, et autorise une largeur particulièrement réduite au transport.

Le fait qu'au transport, la bielle supérieure (15) et la bielle inférieure (16) soient abaissées et rapprochées de la partie avant (10), confère au bâti central (2), par comparaison à la position de travail, une dimension suivant le sens d'avance (A) plus faible. Le déplacement desdites bielles (15, 16) permet en sus de déplacer le centre de gravité du bâti central (2) vers l'avant et vers le sol, ce qui améliore la stabilité de la machine (1). Les roues (8) sont plus proches des roues arrière du tracteur (6) qu'au travail, ce qui améliore la maniabilité de la machine (1) en virage, facilite l'entrée de parcelle, et rend superflu le recours à un train de roues directionnel. Le déplacement du dispositif d'articulation (12) combiné au repliement vers l'arrière des dispositifs de travail (3), rend la machine (1) en position de transport relativement compacte en longueur. Il est ainsi possible de concevoir des dispositifs de travail (3) qui, au travail, présentent une extension importante dans une direction perpendiculaire au sens d'avance (A), et de maintenir l'encombrement de la machine (1) au transport parallèlement au sens d'avance (A) à une valeur admissible pour un transport aisé sur route ouverte.

Dans la position de travail, l'axe de chacune des premières articulations (9) s'étend de préférence dans une direction sensiblement horizontale afin que les membres de travail (5) vus suivant une représentation latérale de la machine (1) conservent l'orientation sensiblement parallèle au sol requise pour un bon suivi de terrain.

Dans la position de transport, l'axe de chacune des premières articulations (9) peut présenter une inclinaison rapprochée de la verticale. Il en résulte que la hauteur de la machine (1) se trouve considérablement réduite, avec à la clé un abaissement du centre de gravité de la machine (1) favorable à la stabilité lors du transport.

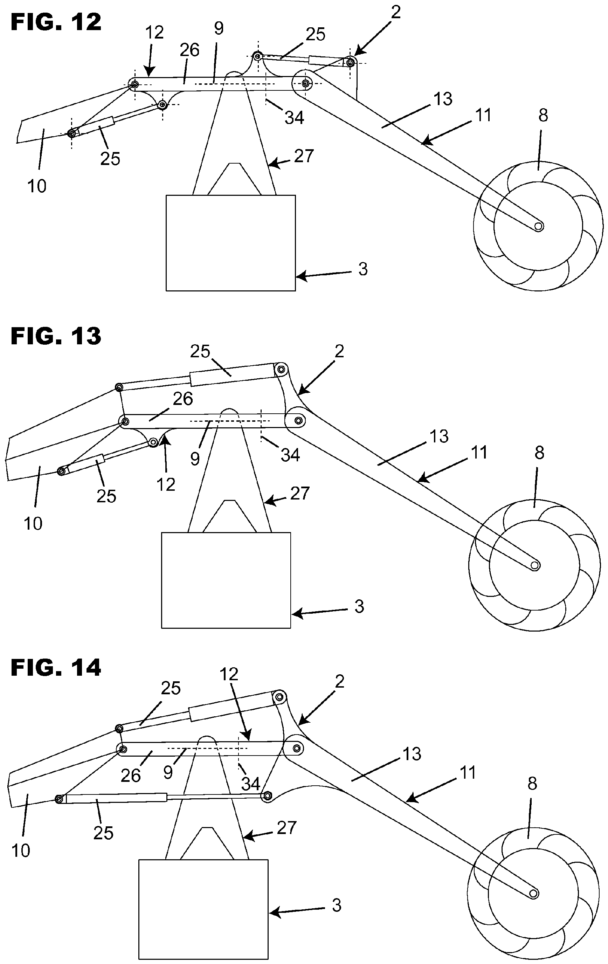

Dans une quatrième variante de réalisation de la machine (1) représentée à la figure 12, le dispositif d'articulation (12) est constitué d'une bielle centrale (26). Cette bielle centrale (26) est reliée à la partie avant (10) et à la partie arrière (11) par des articulations dont les axes sont sensiblement perpendiculaires au sens d'avance (A). Ainsi, le bâti central (2) composé de la partie avant (10), de la partie arrière (11) et du dispositif d'articulation (12) se déforme dans un plan sensiblement vertical et sensiblement parallèle au sens d'avance (A).

Dans cette quatrième variante de réalisation, le dispositif de déplacement (24) se compose d'un premier dispositif à longueur variable (25) articulé entre la bielle centrale (26) et la partie avant (10), et d'un deuxième dispositif à longueur variable (25) articulé entre la bielle centrale (26) et la partie arrière (11).

Une cinquième variante de réalisation ainsi qu'une sixième se distinguent de la quatrième par le fait que le dispositif de déplacement (24) est réalisé différemment. En effet, la cinquième variante de réalisation prévoit que le dispositif de déplacement (24) se compose d'un premier dispositif à longueur variable (25) articulé entre la bielle centrale (26) et ledit bâti central (2), autrement entre la bielle centrale (26) et la partie avant (10) ou bien entre la bielle centrale (26) et la partie arrière (11), et d'un deuxième élément à longueur variable (25) articulé entre la partie avant (10) et la partie arrière (11). La sixième variante de réalisation prévoit que le dispositif de déplacement (24) se compose d'un premier élément à longueur variable (25) ainsi que d'un deuxième, qui sont tous deux articulés entre la partie avant (10) et la partie arrière (11), et qui sont de préférence non parallèles entre eux.

Dans les quatrième, cinquième et sixième variantes de réalisation susmentionnées, au moins un des dispositifs à longueur variable (25) peut être un vérin hydraulique.

Dans la position de transport, la bielle centrale (26) est abaissée et rapprochée de la partie avant (10). L'extrémité arrière de ladite bielle centrale (26) est déplacée dans le sens d'avance (A) et rapprochée du sol. Il en résulte que les axes des premières articulations (9) sont aussi déplacés dans le sens d'avance (A) et rapprochés du sol. Ils présentent alors une inclinaison vers le sol suivant une direction opposée au sens d'avance (A). De préférence, lesdits axes sont eux aussi déplacés dans le sens d'avance (A) et rapprochés du sol. Les dispositifs de travail (3) sont rabattus vers l'arrière autour des premières articulations (9). Le bâti central (2) présente une dimension suivant le sens d'avance (A) plus faible qu'au travail, et son centre de gravité est déplacé vers l'avant et vers le sol. Les roues (8) sont rapprochées des roues arrière du tracteur (6). Dans la position de travail, l'axe de chacune des premières articulations (9) s'étend de préférence dans une direction sensiblement horizontale, tandis que dans la position de transport, il peut présenter une inclinaison rapprochée de la verticale.

Le mode de réalisation de la machine (1) selon l'invention décrit précédemment prévoit que chacun des dispositifs de travail (3) est relié par la première articulation (9) correspondante au dispositif d'articulation (12).

Ainsi, dans les première, deuxième et troisième variantes de réalisation, chacun des dispositifs de travail (3) est relié par la première articulation (9) correspondante à la bielle supérieure (15) ou bien à la bielle inférieure (16). Le fait de relier chacun des dispositifs de travail (3) à la bielle supérieure (15), ainsi que représenté sur les figures 1 à 9, présente l'avantage que la bielle supérieure (15) peut être formée par une structure complexe présentant une certaine extension verticale, sans que cette extension verticale ne vienne réduire la garde au sol de la machine (1). La conception d'une structure complexe pour la bielle reliée aux dispositifs de travail (3), peut notamment être requise par des impératifs de rigidité. Alternativement, chacun des dispositifs de travail (3) peut être relié par la première articulation (9) correspondante à la bielle inférieure (16). Cette disposition peut être préférée afin d'abaisser le centre de gravité de la machine (1) au travail et au transport.

Dans les quatrième, cinquième et sixième variantes de réalisation, chacun des dispositifs de travail (3) est relié par la première articulation (9) correspondante à la bielle centrale (26).

Etant donné que la machine (1) est sensiblement symétrique par rapport au plan (55), le centre de gravité de la machine (1) est localisé dans ou à faible distance dudit plan (55). De préférence, le centre de gravité de la machine (1) dans la position de transport est situé à l'avant et à proximité de l'axe des roues (8). Le fait que le centre de gravité soit situé à l'avant des roues (8) empêche tout risque de basculement en arrière de la machine (1), et le fait qu'il soit en plus localisé à proximité de l'axe des roues (8) limite le risque d'un basculement autour d'un axe parallèle au sens d'avance (A).

Chacun des dispositifs de travail (3) comprend un dispositif de liaison (27) et un cadre porteur (4) qui supporte au moins un membre de travail (5). Dans les variantes de réalisation représentées sur les figures annexées, chacun des membres de travail (5) est formé par une barre de coupe comprenant une pluralité de rotors constitués par des disques ou des tambours munis de couteaux qui s'étendent au-delà de leur périphérie. Les rotors sont montés sur des paliers disposés à intervalles plus ou moins réguliers sur la barre de coupe, et sont, en fonctionnement, portés en rotation rapide au moyen d'un train de pignons incorporés dans un carter étanche contenant un lubrifiant tel que de l'huile. En étant mis en rotation, les couteaux viennent alors sectionner les plants. Le carter de la barre de coupe se présente sous forme d'un parallélépipède allongé. Le train de pignons est actionné par des moyens de transmission aptes à transmettre l'énergie nécessaire depuis le tracteur, ces moyens de transmission comprenant notamment un carter de renvoi (46) et un élément de transmission articulé (47). Les barres de coupe peuvent être associées à des rotors ou des rouleaux de conditionnement des produits fauchés.

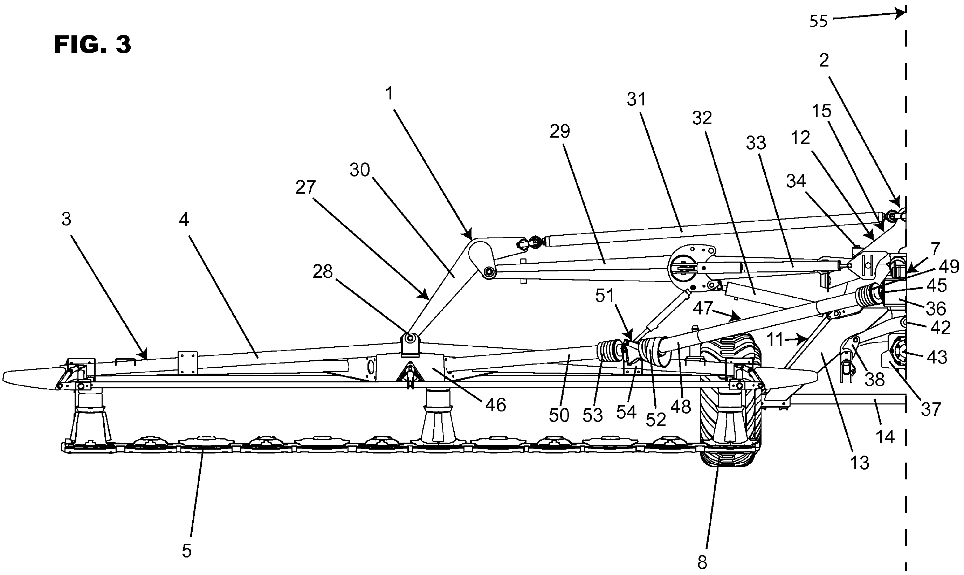

Toutefois, il est envisageable de former le membre de travail (5) par un dispositif d'andainage, un broyeur ou une herse rotative, cette liste n'étant pas exhaustive. Ainsi qu'il ressort notamment de la figure 3, le dispositif de liaison (27) est relié d'une part au dispositif d'articulation (12) par la première articulation (9), d'autre part au cadre porteur (4) par une deuxième articulation (28). Ainsi, il faut comprendre que, dans les première, deuxième et troisième variantes de réalisation de la machine (1), le dispositif de liaison (27) est relié par la première articulation (9) soit à la bielle supérieure (15), soit à la bielle inférieure (16). Il est entendu que dans les quatrième, cinquième et sixième variantes de réalisation de la machine, le dispositif de liaison (27) est relié par la première articulation (9) à la bielle centrale (26).

Une caractéristique importante du dispositif de liaison (27) est qu'il est réalisé de telle sorte que la distance séparant l'axe de la première articulation (9) de l'axe de la deuxième articulation (28) est plus grande dans la position de travail que dans la position de transport. A cet effet, le dispositif de liaison (27) peut être réalisé de différentes manières qui sont explicitées ci-après en référence aux figures.

Dans un mode de réalisation préféré, illustré notamment par la figure 3, le dispositif de liaison (27) comprend une potence (29), un bras (30) et un membre de liaison (31). La potence (29) est reliée au dispositif d'articulation (12) par la première articulation (9) et est articulée au bras (30). Le bras (30) est relié au cadre porteur (4) par la deuxième articulation (28). Il est entendu que dans les première, deuxième et troisième variantes de réalisation de la machine (1), la première articulation (9) relie la potence (29) soit à la bielle supérieure (15), soit à la bielle inférieure (16), et que dans les quatrième, cinquième et sixième variantes de réalisation, la première articulation (9) relie la potence (29) à la bielle centrale (26).

Le membre de liaison (31) peut être une barre articulée d'une part au bras (30), d'autre part au dispositif d'articulation (12) donc soit à la bielle supérieure (15), soit à la bielle inférieure (16), soit à la bielle centrale (26), en fonction des variantes de réalisation considérées.

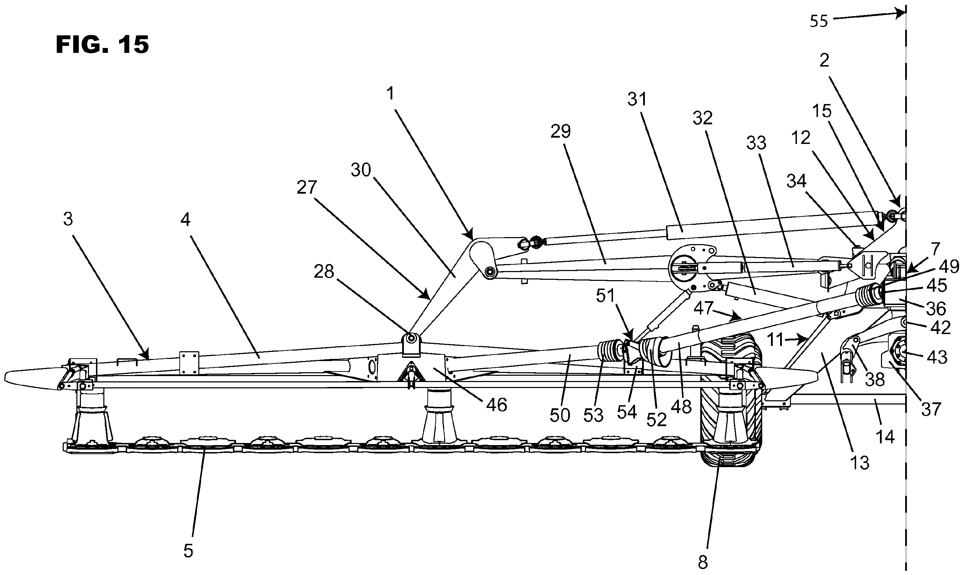

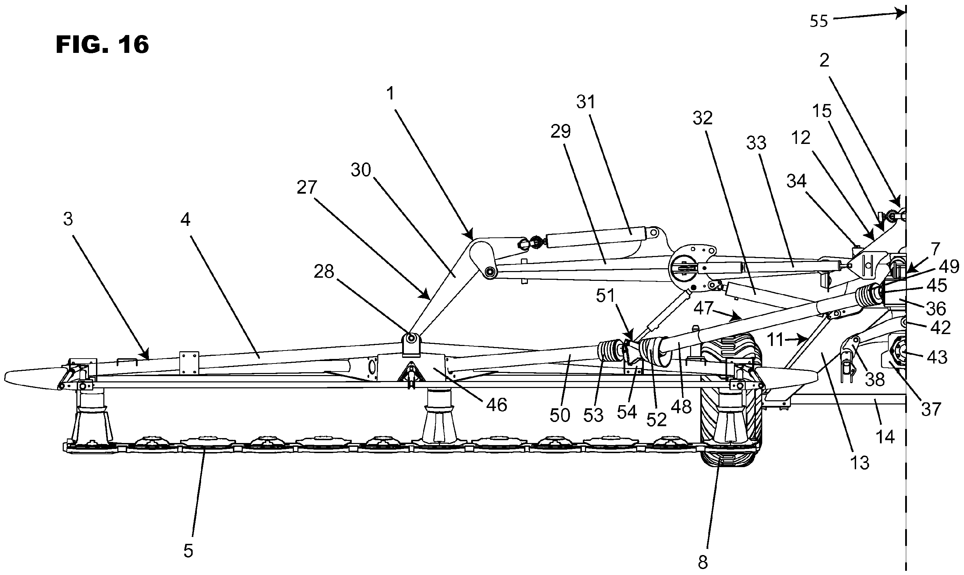

Alternativement, le membre de liaison (31) peut être un vérin articulé au bras (30) et au dispositif d'articulation (12), ainsi que montré à la figure 15, ou bien un vérin articulé au bras (30) et à la potence (29), ainsi que montré à la figure 16. Le fait que le membre de liaison (31) soit un vérin plutôt qu'une barre apporte l'avantage que, dans la position de travail, une variation de longueur du vérin induit une translation du membre de travail (5) suivant une direction sensiblement perpendiculaire au sens d'avance (A). Or, la machine (1) selon l'invention s'utilise de préférence en combinaison avec une machine agricole frontale du même type. Une telle combinaison doit assurer un recouvrement entre la largeur de travail de la machine frontale et les largeurs de travail respectives des dispositifs de travail (3). Afin d'assurer le respect de cette condition de fonctionnement, en particulier lorsque l'ensemble formé par le tracteur, la machine frontale et la machine (1) selon l'invention suit une trajectoire courbe au sol ou bien avance sur un sol en dévers, il est nécessaire de prévoir un dispositif permettant de décaler au moins un des membres de travail (5) suivant une direction perpendiculaire au sens d'avance (A). Cet effet est obtenu par une variation de longueur du vérin, laquelle induit un pivotement du bras (30) autour de la deuxième articulation (28). L'articulation entre le bras (30) et le cadre porteur (4) est alors déplacée dans une direction perpendiculaire au sens d'avance (A) et il en résulte la translation recherchée d'au moins un des membres de travail (5).

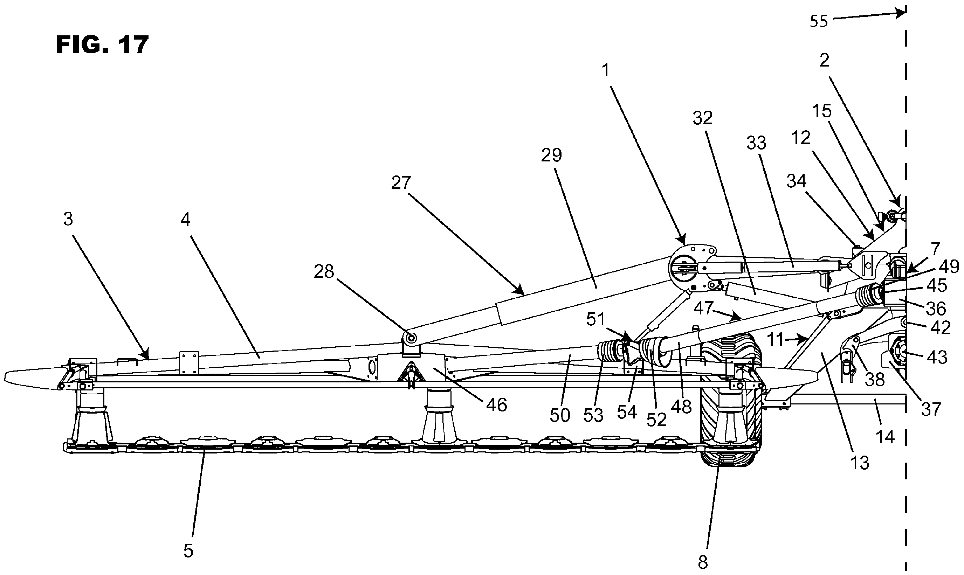

Alternativement, le même effet peut être atteint par le fait que le dispositif de liaison (27) est une potence formée par deux barres pouvant coulisser l'une par rapport à l'autre, ainsi que montré à la figure 17. Le coulissement des deux barres peut être opéré par un vérin hydraulique articulé aux deux barres, un allongement du vérin ayant pour effet un éloignement des deux barres et donc un allongement de la potence, tandis qu'un rétrécissement du vérin a pour effet un rapprochement des deux barres et donc un raccourcissement de la potence.

Dans la position de travail montrée sur les figures 2 et 3, la distance séparant l'axe de la première articulation (9) de l'axe de la deuxième articulation (28) est sensiblement maximale, le corolaire étant que les membres de travail (5) présentent un éloignement sensiblement maximal l'un par rapport à l'autre suivant une direction perpendiculaire au sens d'avance (A). Or, la machine (1) selon l'invention s'utilise de préférence en combinaison avec une machine agricole frontale du même type, conçue et montée de telle sorte qu'il y ait un recouvrement entre la largeur de travail de la machine frontale et les largeurs de travail respectives des dispositifs de travail (3). Par conséquent, l'éloignement maximal susnommé permet à la combinaison de la machine frontale et de la machine (1) selon l'invention, de travailler sur une largeur importante. Le fait que la distance séparant l'axe de la première articulation (9) de l'axe de la deuxième articulation (28) soit plus grande dans la position de travail que dans la position de transport, a pour deuxième conséquence avantageuse de réduire la longueur de la machine (1) dans la position de transport.

Il est par ailleurs prévu un vérin de relevage (32) articulé entre le dispositif d'articulation (12) et chacun des dispositifs de travail (3), de préférence entre le dispositif d'articulation (12) et chacune des potences (29). Dans la position de travail, le vérin de relevage (32) permet d'une part, de relever à une certaine distance au-dessus du sol les membres de travail (5) lors du passage au-dessus d'un andain, d'autre part d'ajuster la pression exercée au sol par les membres de travail (5).

Il est également prévu un vérin de déclenchement (33) articulé entre le dispositif d'articulation (12) et chacun des dispositifs de travail (3), de préférence entre le dispositif d'articulation (12) et chacune des potences (29). De plus, chacun des dispositifs de travail (3) dans la position de travail peut pivoter autour d'une troisième articulation (34) d'axe sensiblement vertical. Dans la variante de réalisation illustrée par les figures 1 à 9, le vérin de déclenchement (33) est articulé à l'avant de la bielle supérieure (15) et à l'avant de la potence (29), en outre la troisième articulation (34) relie la bielle supérieure (15) à la première articulation (9), de sorte que dans la position de travail le dispositif de travail (3) puisse pivoter dans un plan sensiblement horizontal. Lorsque le membre de travail (5) rencontre un obstacle tel qu'une pierre, la troisième articulation (34) autorise le dispositif de travail (3) à pivoter autour d'elle dans une direction opposée au sens d'avance (A), dans le but d'amortir le choc contre cet obstacle. Une fois l'obstacle franchi, le vérin de déclenchement (33) rappelle le dispositif de travail (3) dans sa position initiale sensiblement perpendiculaire au sens d'avance (A).

La partie avant (10) est attachée au dispositif d'accouplement (7) au moyen d'une liaison (35). Le dispositif d'accouplement (7) comprend un carter supérieur (36), un carter inférieur (37) et un arceau d'accouplement (38) connectable aux deux points d'ancrage bas (39) du système trois points (40) du tracteur (6). Le carter supérieur (36) et le carter inférieur (37) sont reliés par une quatrième articulation (41) dont l'axe est sensiblement vertical. Ainsi, la quatrième articulation (41) permet au bâti central (2) de pivoter librement par rapport au tracteur (6) dans un plan sensiblement horizontal, et donc d'améliorer la maniabilité de l'ensemble tracteur (6) - machine (1) à la fois en position de transport et en position de travail, sans qu'il soit nécessaire de munir la machine (1) d'un train de roues directionnel. Le carter inférieur (37) est relié à l'arceau d'accouplement (38) par une cinquième articulation (42) dont l'axe est sensiblement horizontal et perpendiculaire à la droite reliant les deux points d'ancrage bas (39). Ainsi, la cinquième articulation (42) permet au bâti central (2) de pivoter librement par rapport au tracteur (6) suivant un axe parallèle au sens d'avance (A), ledit pivotement permettant aux dispositifs de travail (3), notamment en position de travail, de suivre le terrain sur toute leur largeur lorsque l'ensemble tracteur (6) - machine (1) passe d'un sol horizontal à un sol en dévers ou inversement.

Le carter inférieur (37) comprend un élément d'accouplement d'entrée (43) conçu pour s'accoupler à la prise de force (44) du tracteur (6) en vue de l'entraînement des membres de travail (5). Le carter supérieur (36) comprend deux éléments d'accouplement de sortie (45) qui sont chacun dirigés vers l'un, respectivement l'autre des dispositifs de travail (3). Le carter inférieur (37) et le carter supérieur (36) contiennent des éléments d'engrènement reliant mécaniquement l'élément d'accouplement d'entrée (43) aux éléments d'accouplement de sortie (45) de telle sorte que l'énergie mécanique fournie à l'élément d'accouplement d'entrée (43) soit équitablement répartie vers les éléments d'accouplement de sortie (45). Un exemple de réalisation des éléments d'engrènement comporte une première roue dentée solidaire de l'élément d'accouplement d'entrée (43) et tournant autour du même axe que l'élément d'accouplement d'entrée (43). Cette première roue dentée engrène avec une deuxième roue dentée orientée perpendiculairement à la première roue dentée, la deuxième roue dentée tournant autour d'un axe confondu avec l'axe de la quatrième articulation (41). Les première et deuxième roues dentées sont logées à l'intérieur du carter inférieur (37). La deuxième roue dentée est solidaire d'une troisième roue dentée tournant autour du même axe que la deuxième roue dentée. La troisième roue dentée est logée dans le carter supérieur (36) et engrène directement avec deux roues dentées de sortie qui entraînent en rotation les éléments d'accouplement de sortie (45).

Le dispositif d'accouplement (7) ainsi constitué permet au bâti central (2) de pivoter dans tous les plans avec une grande amplitude tout en assurant un entraînement homocinétique des membres de travail (5).

Chaque dispositif de travail (3) comprend un carter de renvoi (46) pour la mise en mouvement d'au moins un des membres de travail (5). Le carter de renvoi (46) est de préférence formé par un carter de transmission à engrenages comprenant un ou plusieurs étages de réduction. Le carter de renvoi (46) est accouplé à l'élément d'accouplement de sortie (45) dirigé vers le dispositif de travail (3) correspondant via un élément de transmission articulé (47). L'élément de transmission articulé (47) comprend un premier arbre (48) télescopique relié par un joint universel (49) du type cardan à l'élément d'accouplement de sortie (45) ainsi qu'un deuxième arbre (50) relié par un joint universel non représenté du type cardan au carter de renvoi (46). Les premier et deuxième arbres (48, 50) sont reliés par un accouplement (51) formé par un arbre rigide portant à chacune de ses extrémités un joint universel (52, 53) du type cardan relié au premier respectivement au deuxième arbre. L'arbre rigide est en liaison pivot par rapport à un support (54) solidaire du cadre porteur (4) du dispositif de travail (3). La liaison pivot est positionnée par rapport au dispositif de travail (3) de telle sorte que la longueur du premier arbre (48) télescopique soit sensiblement constante entre la position de travail et la position de transport.

Il est bien évident que l'invention n'est pas limitée au mode de réalisation décrit ci-dessus et représenté sur les figures annexées. Des modifications restent possibles, notamment en ce qui concerne la constitution ou le nombre des divers éléments ou par substitution d'équivalents techniques, sans pour autant sortir du domaine de protection tel que défini dans les revendications annexées.

## Revendications

1. Machine agricole (1) comprenant un bâti central (2) et deux dispositifs de travail (3), le bâti central (2) étant conçu pour être raccordé à un tracteur (6) afin d'être tracté par celui-ci, et étant muni de roues (8) en contact avec le sol, chaque dispositif de travail (3) étant relié audit bâti central (2) par une première articulation (9) et pouvant être déplacé entre une position de transport dans laquelle chacun s'étend dans un plan sensiblement parallèle au sens d'avance (A), et une position de travail dans laquelle chacun s'étend dans un plan sensiblement perpendiculaire au sens d'avance (A), ***caractérisée en ce que*** ledit bâti central (2) se compose d'une partie avant (10), d'une partie arrière (11) qui porte lesdites roues (8) et d'un dispositif d'articulation (12), que ledit dispositif d'articulation (12) comporte au moins une bielle (15, 16, 26) articulée à ladite partie avant (10) et à ladite partie arrière (11), que ledit dispositif d'articulation (12) peut pivoter, à l'aide d'un dispositif de déplacement (24), dans un plan sensiblement vertical et sensiblement parallèle au sens d'avance (A) par rapport à ladite partie avant (10) et par rapport à ladite partie arrière (11), que chaque dispositif de travail (3) est relié directement audit dispositif d'articulation (12) par ladite première articulation (9), que l'axe de ladite première articulation (9) s'étend dans un plan sensiblement vertical et sensiblement parallèle au sens d'avance (A), que dans ledit plan et dans ladite position de transport, l'axe de ladite première articulation (9) présente une inclinaison vers le sol suivant une direction opposée au sens d'avance (A), et que dans ladite position de transport, chaque dispositif de travail (3) est replié vers l'arrière autour de ladite première articulation (9).

2. Machine agricole selon la revendication 1, ***caractérisée en ce qu**'*en position de travail, l'axe de ladite première articulation (9) s'étend dans une direction sensiblement horizontale.

3. Machine agricole selon la revendication 1 ou 2, ***caractérisée en ce qu**'*en position de transport, l'axe de ladite première articulation (9) présente une position rapprochée de la verticale.

4. Machine agricole selon l'une quelconque des revendications 1 à 3, ***caractérisée en ce que*** ladite au moins une bielle (15, 16, 26) dudit dispositif d'articulation (12) comporte une extrémité arrière articulée à ladite partie arrière (11), et que ladite extrémité arrière est déplacée dans le sens d'avance (A) et vers le sol lorsque ladite machine agricole (1) est déplacée de ladite position de travail vers ladite position de transport.

5. Machine agricole selon la revendication 4, ***caractérisée en ce que*** les axes desdites premières articulations (9) sont déplacés dans le sens d'avance (A) et vers le sol lorsque ladite machine agricole (1) est déplacée de ladite position de travail vers ladite position de transport.

6. Machine agricole selon l'une quelconque des revendications 1 à 5, ***caractérisée en ce que*** le dispositif d'articulation (12) se compose d'une bielle supérieure (15) et d'une bielle inférieure (16) formant un quadrilatère déformable, que ladite bielle supérieure (15) est articulée à ladite partie avant (10) au moyen d'une articulation (20) et à ladite partie arrière (11) au moyen d'une articulation (19), et que ladite bielle inférieure (16) est articulée à ladite partie avant (10) au moyen d'une articulation (21) et à ladite partie arrière (11) au moyen d'une articulation (23).

7. Machine agricole selon la revendication 6, ***caractérisée en ce que*** ledit dispositif de déplacement (24) est un dispositif à longueur variable (25) articulé entre ladite partie avant (10) et ladite partie arrière (11).

8. Machine agricole selon la revendication 6, ***caractérisée en ce que*** ledit dispositif de déplacement (24) est un dispositif à longueur variable (25) articulé entre ladite bielle supérieure (15) et ladite bielle inférieure (16).

9. Machine agricole selon la revendication 6, ***caractérisée en ce que*** ledit dispositif de déplacement (24) est un dispositif à longueur variable (25) articulé entre l'une desdites bielles (15, 16) et ledit bâti central (2).

10. Machine agricole selon l'une quelconque des revendications 7 à 9, ***caractérisée en ce que*** ledit dispositif à longueur variable (25) est un vérin hydraulique.

11. Machine agricole selon l'une quelconque des revendications 1 à 5, ***caractérisée en ce que*** le dispositif d'articulation (12) est constitué d'une bielle centrale (26).

12. Machine agricole selon la revendication 11, ***caractérisée en ce que*** ledit dispositif de déplacement (24) se compose d'un premier dispositif à longueur variable (25) articulé entre ladite bielle centrale (26) et ladite partie avant (10), et d'un deuxième dispositif à longueur variable (25) articulé entre ladite bielle centrale (26) et ladite partie arrière (11).

13. Machine agricole selon la revendication 11, ***caractérisée en ce que*** ledit dispositif de déplacement (24) se compose d'un premier dispositif à longueur variable (25) articulé entre ladite bielle centrale (26) et ledit bâti central (2), et d'un deuxième dispositif à longueur variable (25) articulé entre ladite partie avant (10) et ladite partie arrière (11).

14. Machine agricole selon la revendication 11, ***caractérisée en ce que*** ledit dispositif de déplacement (24) se compose d'un premier dispositif à longueur variable (25) articulé entre ladite partie avant (10) et ladite partie arrière (11), et d'un deuxième dispositif à longueur variable (25) articulé entre ladite partie avant (10) et ladite partie arrière (11).

15. Machine agricole selon l'une quelconque des revendications 12 à 14, ***caractérisée en ce qu***'au moins un desdits dispositifs à longueur variable (25) est un vérin hydraulique.

16. Machine agricole selon l'une quelconque des revendications 1 à 15, ***caractérisée en ce que*** dans ladite position de transport, le centre de gravité de ladite machine (1) est localisé à l'avant et à proximité de l'axe desdites roues (8).

17. Machine agricole selon l'une quelconque des revendications 1 à 16, ***caractérisée en ce que*** chaque dispositif de travail (3) comprend un dispositif de liaison (27) et un cadre porteur (4) qui supporte au moins un membre de travail (5), que ledit dispositif de liaison (27) est relié audit dispositif d'articulation (12) par ladite première articulation (9), que ledit dispositif de liaison (27) est relié audit cadre porteur (4) par une deuxième articulation (28), et que ledit dispositif de liaison (27) est réalisé de telle sorte que la distance séparant l'axe de ladite première articulation (9) de l'axe de ladite deuxième articulation (28) est plus grande dans ladite position de travail que dans ladite position de transport.

18. Machine agricole selon la revendication 17, ***caractérisée en ce que*** ledit dispositif de liaison (27) comprend une potence (29), un bras (30) et un membre de liaison (31), que ladite potence (29) est reliée audit dispositif d'articulation (12) par ladite première articulation (9) et est articulée audit bras (30), que ledit bras (30) est relié audit cadre porteur (4) par ladite deuxième articulation (28), et que ledit membre de liaison (31) est articulé audit bras (30).

19. Machine agricole selon la revendication 18, ***caractérisée en ce que*** ledit membre de liaison (31) est une barre articulée audit dispositif d'articulation (12).

20. Machine agricole selon la revendication 18, ***caractérisée en ce que*** ledit membre de liaison (31) est un vérin articulé audit dispositif d'articulation (12) et que ledit vérin est articulé audit bras (30) de telle sorte que, dans ladite position de travail, une variation de longueur dudit vérin induise une translation dudit membre de travail (5) suivant une direction sensiblement perpendiculaire au sens d'avance (A).

21. Machine agricole selon la revendication 18, ***caractérisée en ce que*** ledit membre de liaison (31) est un vérin articulé à ladite potence (29) et que ledit vérin est articulé audit bras (30) de telle sorte que, dans ladite position de travail, une variation de longueur dudit vérin induise une translation dudit membre de travail (5) suivant une direction sensiblement perpendiculaire au sens d'avance (A).

22. Machine agricole selon la revendication 17, ***caractérisée en ce que*** ledit dispositif de liaison (27) est une potence formée par deux barres pouvant coulisser l'une par rapport à l'autre.

23. Machine agricole selon l'une quelconque des revendications 1 à 21, ***caractérisée en ce qu***'un vérin de relevage (32) est articulé entre ledit dispositif d'articulation (12) et chacun desdits dispositifs de travail (3).

24. Machine agricole selon l'une quelconque des revendications 1 à 22, ***caractérisée en ce qu***'un vérin de déclenchement (33) est articulé entre ledit dispositif d'articulation (12) et chacun desdits dispositifs de travail (3), et que chacun desdits dispositifs de travail (3) dans ladite position de travail peut pivoter autour d'une troisième articulation (34) d'axe sensiblement vertical.

25. Machine agricole selon l'une quelconque des revendications 1 à 23, ***caractérisée en ce que*** ladite partie avant (10) est attachée au moyen d'une liaison (35) à un dispositif d'accouplement (7) comprenant un carter supérieur (36), un carter inférieur (37) et un arceau d'accouplement (38) connectable aux deux points d'ancrage bas (39) du système trois points (40) du tracteur (6), que ladite liaison (35) relie ladite partie avant (10) audit carter supérieur (36), que ledit carter supérieur (36) et ledit carter inférieur (37) sont reliés par une quatrième articulation (41) dont l'axe est sensiblement vertical, que ledit carter inférieur (37) est relié audit arceau d'accouplement (38) par une cinquième articulation (42) dont l'axe est sensiblement horizontal et perpendiculaire à la droite reliant lesdits deux points d'ancrage bas (39).

26. Machine agricole selon la revendication 24, ***caractérisée en ce que*** ledit carter inférieur (37) comprend un élément d'accouplement d'entrée (43) conçu pour s'accoupler à la prise de force (44) du tracteur (6), que ledit carter supérieur (36) comprend deux éléments d'accouplement de sortie (45), que chacun desdits éléments d'accouplement de sortie (45) est dirigé vers l'un respectivement l'autre desdits dispositifs de travail (3), que ledit carter inférieur (37) et ledit carter supérieur (36) contiennent des éléments d'engrènement reliant mécaniquement ledit élément d'accouplement d'entrée (43) auxdits éléments d'accouplement de sortie (45) de telle sorte que l'énergie mécanique fournie audit élément d'accouplement d'entrée (43) soit équitablement répartie vers lesdits éléments d'accouplement de sortie (45).

27. Machine agricole selon la revendication 25, ***caractérisée en ce que*** chaque dispositif de travail (3) comprend un carter de renvoi (46) pour la mise en mouvement d'au moins un desdits membres de travail (5), que ledit carter de renvoi (46) est accouplé audit élément d'accouplement de sortie (45) dirigé vers ledit dispositif de travail (3) via un élément de transmission articulé (47) qui comprend un arbre (48) télescopique, ledit élément de transmission articulé (47) étant articulé audit dispositif de travail (3) de telle sorte que la longueur dudit arbre (48) télescopique soit sensiblement constante entre ladite position de travail et ladite position de transport.

28. Machine agricole selon l'une quelconque des revendications 1 à 27, ***caractérisée en ce que*** c'est une faucheuse.

## Patentansprüche

1. Landwirtschaftliche Maschine (1) mit einem Mittelrahmen (2) und zwei Arbeitsvorrichtungen (3), wobei der Mittelrahmen (2) dazu gestaltet ist, mit einem Schlepper (6) gekuppelt zu werden, um von diesem gezogen zu werden, und Räder (8) aufweist, die in Kontakt mit dem Boden sind, wobei jede Arbeitsvorrichtung (3) mittels eines ersten Gelenks (9) mit dem Mittelrahmen (2) verbunden ist, und zwischen einer Transportstellung, in welcher sich jeder in einer zur Vorschubrichtung (A) im wesentlichen parallelen Ebene erstreckt, und einer Arbeitsstellung, in welcher sich jeder in einer zur Vorschubrichtung (A) im wesentlichen senkrechten Ebene erstreckt, verschoben werden kann, ***dadurch gekennzeichnet,* dass** der Mittelrahmen (2) aus einem Vorderteil (10), einem Hinterteil (11), welches die Räder (8) trägt, und einer Anlenkungsvorrichtung (12) zusammengesetzt ist, dass die Anlenkungsvorrichtung (12) mindestens einen Lenker (15, 16, 26) aufweist, der an dem Vorderteil (10) und an dem Hinterteil (11) angelenkt ist, dass die Anlenkungsvorrichtung (12) mittels einer Fortbewegungsvorrichtung (24) bezüglich des Vorderteils (10) und des Hinterteils (11) in einer im wesentlichen senkrechten und im wesentlichen zur Vorschubrichtung (A) parallelen Ebene schwenken kann, dass jede Arbeitsvorrichtung (3) direkt mittels des ersten Gelenks (9) mit der Anlenkungsvorrichtung (12) verbunden ist, dass die Achse des ersten Gelenks (9) sich in einer im wesentlichen senkrechten und im wesentlichen zur Vorschubrichtung (A) parallelen Ebene erstreckt, dass in dieser Ebene und in der Transportstellung, die Achse des ersten Gelenks (9) eine Neigung zum Boden in einer zur Vorschubrichtung (A) entgegengesetzten Richtung aufweist und, dass in der Transportstellung, jede Arbeitsvorrichtung (3) um das erste Gelenk (9) nach hinten geklappt ist.

2. Landwirtschaftliche Maschine nach Anspruch 1, ***dadurch gekennzeichnet,* dass** in der Arbeitsstellung, die Achse des ersten Gelenks (9) sich in einer im wesentlichen horizontalen Richtung erstreckt.

3. Landwirtschaftliche Maschine nach Anspruch 1 oder 2, ***dadurch gekennzeichnet,* dass** in der Transportsstellung, die Achse des ersten Gelenks (9) eine der Vertikalen angenäherte Stellung aufweist.

4. Landwirtschaftliche Maschine nach irgend einem der Ansprüche 1 bis 3, ***dadurch gekennzeichnet,* dass** der mindestens eine Lenker (15, 16, 26) der Anlenkungsvorrichtung (12) ein an dem Hinterteil (11) angelenktes hinteres Ende aufweist und, dass das hintere Ende in die Vorschubrichtung (A) und zum Boden verschoben wird, wenn die landwirtschaftliche Maschine (1) von der Arbeitsstellung in die Transportstellung versetzt wird.

5. Landwirtschaftliche Maschine nach Anspruch 4, ***dadurch gekennzeichnet,* dass** die Achsen der ersten Gelenke (9) in die Vorschubrichtung (A) und zum Boden verschoben werden, wenn die landwirtschaftliche Maschine (1) von der Arbeitsstellung in die Transportstellung versetzt wird.

6. Landwirtschaftliche Maschine nach irgend einem der Ansprüche 1 bis 5, ***dadurch gekennzeichnet,* dass** die Anlenkungsvorrichtung (12) sich aus einem Oberlenker (15) und einem Unterlenker (16) zusammensetzt, die ein verformbares Viereck bilden, dass der Oberlenker (15) an dem Vorderteil (10) mittels eines Gelenks (20) und an dem Hinterteil (11) mittels eines Gelenks (19) angelenkt ist und, dass der Unterlenker (16) an dem Vorderteil (10) mittels eines Gelenks (21) und an dem Hinterteil (11) mittels eines Gelenks (23) angelenkt ist.

7. Landwirtschaftliche Maschine nach Anspruch 6, ***dadurch gekennzeichnet,* dass** die Fortbewegungsvorrichtung (24) eine Vorrichtung mit variabler Länge (25) ist, die zwischen dem Vorderteil (10) und dem Hinterteil (11) angelenkt ist.

8. Landwirtschaftliche Maschine nach Anspruch 6, ***dadurch gekennzeichnet,* dass** die Fortbewegungsvorrichtung (24) eine Vorrichtung mit variabler Länge (25) ist, die zwischen dem Oberlenker (15) und dem Unterlenker (16) angelenkt ist.

9. Landwirtschaftliche Maschine nach Anspruch 6, ***dadurch gekennzeichnet,* dass** die Fortbewegungsvorrichtung (24) eine Vorrichtung mit variabler Länge (25) ist, die zwischen einem der Lenker (15, 16) und dem Mittelrahmen (2) angelenkt ist.

10. Landwirtschaftliche Maschine nach irgend einem der Ansprüche 7 bis 9, ***dadurch gekennzeichnet,* dass** die Vorrichtung mit variabler Länge (25) ein Hydraulikzylinder ist.

11. Landwirtschaftliche Maschine nach irgend einem der Ansprüche 1 bis 5, ***dadurch gekennzeichnet,* dass** die Anlenkungsvorrichtung (12) aus einem Mittellenker (26) gebildet ist.

12. Landwirtschaftliche Maschine nach Anspruch 11, ***dadurch gekennzeichnet,* dass** die Fortbewegungsvorrichtung (24) aus einer ersten Vorrichtung mit variabler Länge (25), die zwischen dem Mittellenker (26) und dem Vorderteil (10) angelenkt ist, und einer zweiten Vorrichtung mit variabler Länge (25), die zwischen dem Mittellenker (26) und dem Hinterteil (11) angelenkt ist, gebildet ist.

13. Landwirtschaftliche Maschine nach Anspruch 11, ***dadurch gekennzeichnet,* dass** die Fortbewegungsvorrichtung (24) aus einer ersten Vorrichtung mit variabler Länge (25), die zwischen dem Mittellenker (26) und dem Mittelrahmen (2) angelenkt ist, und einer zweiten Vorrichtung mit variabler Länge (25), die zwischen dem Vorderteil (10) und dem Hinterteil (11) angelenkt ist, gebildet ist.

14. Landwirstchaftliche Maschine nach Anspruch 11, ***dadurch gekennzeichnet,* dass** die Fortbewegungsvorrichtung (24) aus einer ersten Vorrichtung mit variabler Länge (25), die zwischen dem Vorderteil (10) und dem Hinterteil (11) angelenkt ist, und einer zweiten Vorrichtung mit variabler Länge (25), die zwischen dem Vorderteil (10) und dem Hinterteil (11) angelenkt ist, gebildet ist.

15. Landwirtschaftliche Maschine nach irgend einem der Ansprüche 12 bis 14, ***dadurch gekennzeichnet,* dass** mindestens eine der Vorrichtungen mit variabler Länge (25) ein Hydraulikzylinder ist.

16. Landwirtschaftliche Maschine nach irgend einem der Ansprüche 1 bis 15, ***dadurch gekennzeichnet,* dass** in der Transportstellung, der Schwerpunkt der Maschine (1) vorne und in der Nähe der Achse der Räder (8) liegt.

17. Landwirtschaftliche Maschine nach irgend einem der Ansprüche 1 bis 16, ***dadurch gekennzeichnet,* dass** jede Arbeitsvorrichtung (3) eine Verbindungsvorrichtung (27) und ein Tragwerk (4), welches mindestens ein Arbeitselement (5) trägt, aufweist, dass die Verbindungsvorrichtung (27) mittels des ersten Gelenks (9) mit der Anlenkungsvorrichtung (12) verbunden ist, dass die Verbindungsvorrichtung (27) mittels eines zweiten Gelenks (28) mit dem Tragwerk (4) verbunden ist und, dass die Verbindungsvorrichtung (27) derart hergestellt ist, dass der Abstand, der die Achse des ersten Gelenks (9) von der Achse des zweiten Gelenks (28) trennt, in der Arbeitsstellung grösser ist als in der Transportstellung.

18. Landwirtschaftliche Maschine nach Anspruch 17, ***dadurch gekennzeichnet,* dass** die Verbindungsvorrichtung (27) ein Tragarm (29), ein Arm (30) und ein Verbindungselement (31) aufweist, dass der Tragarm (29) mittels des ersten Gelenks (9) mit der Anlenkungsvorrichtung (12) verbunden ist und an dem Arm (30) angelenkt ist, dass der Arm (30) mittels des zweiten Gelenks (28) mit dem Tragwerk (4) verbunden ist und, dass das Verbindungselement (31) an dem Arm (30) angelenkt ist.

19. Landwirtschaftliche Maschine nach Anspruch 18, ***dadurch gekennzeichnet,* dass** das Verbindungselement (31) eine an der Anlenkungsvorrichtung (12) angelenkte Stange ist.

20. Landwirtschaftliche Maschine nach Anspruch 18, ***dadurch gekennzeichnet,* dass** das Verbindungselement (31) ein an der Anlenkungsvorrichtung (12) angelenkter Zylinder ist und, dass der Zylinder and dem Arm (30) derart angelenkt ist, dass in der Arbeitsstellung, eine Änderung der Länge des Zylinders eine Verschiebung des Arbeitselements (5) in eine zur Vorschubrichtung (A) senkrechte Richtung verursacht.

21. Landwirtschaftliche Maschine nach Anspruch 18, ***dadurch gekennzeichnet,* dass** das Verbindungselement (31) ein an den Tragarm (29) angelenkter Zylinder ist und, dass der Zylinder derart an dem Arm (30) derart angelenkt ist, dass in der Arbeitsstellung, eine Änderung der Länge des Zylinders, eine Verschiebung des Arbeitselements (5) in eine zur Vorschubrichtung (A) im wesentlichen senkrechte Richtung verursacht.

22. Landwirtschaftliche Maschine nach Anspruch 17, ***dadurch gekennzeichnet,* dass** die Verbindungsvorrichtung (27) ein Tragarm ist, der aus zwei Stangen gebildet ist, die die eine gegenüber der anderen gleiten können.

23. Landwirtschaftliche Maschine nach irgend einem der Ansprüche 1 bis 21, ***dadurch gekennzeichnet,* dass** ein Hubzylinder (32) zwischen der Anlenkungsvorrichtung (12) und jeder der Arbeitsvorrichtungen (3) angelenkt ist.

24. Landwirtschaftliche Maschine nach irgend einem der Ansprüche 1 bis 22, ***dadurch gekennzeichnet,* dass** ein Auslösezylinder (33) zwischen der Anlenkungsvorrichtung (12) und jeder Arbeitsvorrichtung (3) angelenkt ist und, dass jede Arbeitsvorrichtung (3) in der Arbeitsstellung um ein drittes Gelenk (34) mit einer im wesentlichen senkrechten Achse, schwenken kann.

25. Landwirtschaftliche Maschine nach irgend einem der Ansprüche 1 bis 23, ***dadurch gekennzeichnet,* dass** der Vorderteil (10) mittels einer Verbindung (35) an einer Kupplungsvorrichtung (7) befestigt ist, welche ein oberes Gehäuse (36), ein unteres Gehäuse (37) und ein Kupplungsbügel (38) umfasst, welcher an den zwei unteren Verankerungspunkten (39) des Dreipunktkupplungssystems (40) des Schleppers (6) angeschlossen werden kann, dass die Verbindung (35) den Vorderteil (10) mit dem oberen Gehäuse (36) verbindet, dass das obere Gehäuse (36) und das untere Gehäuse (37) durch ein viertes Gelenk (41) verbunden sind, dessen Achse im wesentlichen senkrecht ist, dass das untere Gehäuse (37) mit dem Kupplungsbügel (38) mittels eines fünften Gelenks (42) verbunden ist, dessen Achse im wesentlichen horizontal und senkrecht zu der Gerade, welche die zwei Verankerungspunkte (39) verbindet, verläuft.

26. Landwirtschaftliche Maschine nach Anspruch 24, ***dadurch gekennzeichnet,* dass** das untere Gehäuse (37) ein Antriebkupplungselement (43) umfasst, das derart gestaltet ist, sich an der Zapfwelle (44) des Schleppers (6) anzukuppeln, dass das obere Gehäuse (36) zwei Abtriebkupplungselemente (45) aufweist, dass jedes Abtriebkupplungselement (45) nach eine, jeweils die andere Arbeitsvorrichtung (3) gerichtet ist, dass das untere Gehäuse (37) und das obere Gehäuse (36) Eingriffselemente enthalten, welche das Antriebkupplungselement (43) mit den Abtriebkupplungselementen (45) derart mechanisch verbinden, dass die dem Antriebkupplungselement (43) versorgte mechanische Energie gleichmässig auf die Abtriebkupplungselemente (45) aufgeteilt wird.

27. Landwirtschaftliche Maschine nach Anspruch 25, ***dadurch gekennzeichnet,* dass** jede Arbeitsvorrichtung (3) ein Getriebegehäuse (46) zur Ingangsetzung mindestens eines der Arbeitselementen (5) umfasst, dass das Getriebegehäuse (46) an das Abtriebkupplungselement (45) gekuppelt ist, das mittels eines angelenkten Übertragungselement (47) mit einer Teleskopwelle (48) zur Arbeitsvorrichtung (3) gerichtet ist, wobei das angelenkte Übertragungselements (47) an der Arbeitsvorrichtung (3) derart angelenkt ist, dass die Länge der Teleskopwelle (48) im wesentlichen zwischen der Arbeitsstellung und der Transportstellung kontinuierlich ist.

28. Landwirtchaftliche Maschine nach irgend einem der Ansprüche 1 bis 27, ***dadurch gekennzeichnet,* dass** es sich um eine Mähmaschine handelt.

## Claims

1. Agricultural machine (1) including a central frame (2) and two work devices (3), the central frame (2) being designed to be connected to a tractor (6) so as to be towed by the latter, and being provided with wheels (8) in contact with the ground, each work device (3) being connected to the said central frame (2) by a first articulation (9) and being able to be moved between a transport position in which each work device extends in a plane substantially parallel to the direction of advance (A), and a work position in which each work device extends in a plane substantially perpendicular to the direction of advance (A), ***characterized in* that** the said central frame (2) is composed of a front part (10), a rear part (11) which carries the said wheels (8) and an articulation device (12), that the said articulation device (12) comprises at least one connecting-rod (15, 16, 26) articulated to the said front part (10) and to the said rear part (11), that the said articulation device (12) can pivot by means of a displacement device (24), in a plane which is substantially vertical and substantially parallel to the direction of advance (A) with respect to the said front part (10) and with respect to the said rear part (11), that each work device (3) is connected directly to the said articulation device (12) by the said first articulation (9), that the axis of the said first articulation (9) extends in a plane which is substantially vertical and substantially parallel to the direction of advance (A), that in the said plane and in the said transport position, the axis of the said first articulation (9) presents an inclination towards the ground following a direction opposite to the direction of advance (A), and that in the said transport position, each work device (3) is folded towards the rear about the said first articulation (9).

2. Agricultural machine according to Claim 1, ***characterized in* that** in work position, the axis of the said first articulation (9) extends in a substantially horizontal direction.

3. Agricultural machine according to Claim 1 or 2, ***characterized in* that** in transport position, the axis of the said first articulation (9) has a position close to the vertical.

4. Agricultural machine according to any one of Claims 1 to 3, ***characterized in* that** the said at least one connecting-rod(15, 16, 26) of the said articulation device (12) comprises a rear end articulated to the said rear part (11), and that the said rear end (11) is moved in the direction of advance (A) and towards the ground when the said agricultural machine (1) is moved from the said work position to the said transport position.

5. Agricultural machine according to Claim 4, ***characterized in* that** the axes of the said first articulations (9) are moved in the direction of advance (A) and towards the ground when the said agricultural machine (1) is moved from the said work position to the said transport position.

6. Agricultural machine according to any one of Claims 1 to 5, ***characterized in* that** the articulation device (12) is composed of an upper connecting-rod (15) and a lower connecting-rod (16) forming a deformable quadrilateral, that the said upper connecting-rod (15) is articulated to the said front part (10) by means of an articulation (20) and to the said rear part (11) by means of an articulation (19), and that the said lower connecting-rod (16) is articulated to the said front part (10) by means of an articulation (21) and to the said rear part (11) by means of an articulation (23).

7. Agricultural machine according to Claim 6, ***characterized in* that** the said displacement device (24) is a device of variable length (25) articulated between the said front part (10) and the said rear part (11).

8. Agricultural machine according to Claim 6, ***characterized in* that** the said displacement device (24) is a device of variable length (25) articulated between the said upper connecting-rod (15) and the said lower connecting-rod (16).

9. Agricultural machine according to Claim 6, ***characterized in* that** the said displacement device (24) is a device of variable length (25) articulated between one of the said connecting-rods (15, 16) and the said central frame (2).

10. Agricultural machine according to any one of Claims 7 to 9, ***characterized in* that** the said device of variable length (25) is a hydraulic jack.

11. Agricultural machine according to any one of Claims 1 to 5, ***characterized in* that** the articulation device (12) is constituted by a central connecting-rod (26).

12. Agricultural machine according to Claim 11, ***characterized in* that** the said displacement device (24) is composed of a first device of variable length (25) articulated between the said central connecting-rod (26) and the said front part (10), and of a second device of variable length (25) articulated between the said central connecting-rod (26) and the said rear part (11).

13. Agricultural machine according to Claim 11, ***characterized in* that** the said displacement device (24) is composed of a first device of variable length (25) articulated between the said central connecting-rod (26) and the said central frame (2), and of a second device of variable length (25) articulated between the said front part (10) and the said rear part (11).

14. Agricultural machine according to Claim 11, ***characterized in* that** the said displacement device (24) is composed of a first device of variable length (25) articulated between the said front part (10) and the said rear part (11), and of a second device of variable length (25) articulated between the said front part (10) and the said rear part (11).

15. Agricultural machine according to any one of Claims 12 to 14, ***characterized in* that** at least one of the said devices of variable length (25) is a hydraulic jack.

16. Agricultural machine according to any one of Claims 1 to 15, ***characterized in* that** in the said transport position, the centre of gravity of the said machine (1) is located at the front and close to the axis of the said wheels (8).

17. Agricultural machine according to any one of Claims 1 to 16, ***characterized in* that** each work device (3) includes a connecting device (27) and a support framework (4) which supports at least one work element (5), that the said connecting device (27) is connected to the said articulation device (12) by the said first articulation (9), that the said connecting device (27) is connected to the said support framework (4) by a second articulation (28), and that the said connecting device (27) is carried out such that the distance separating the axis of the said first articulation (9) from the axis of the said second articulation (28) is greater in the said work position than in the said transport position.

18. Agricultural machine according to Claim 17, ***characterized in* that** the said connecting device (27) includes a support arm (29), an arm (30) and a connecting element (31), that the said support arm (29) is connected to the said articulation device (12) by the said first articulation (9) and is articulated to the said arm (30), that the said arm (30) is connected to the said support framework (4) by the said second articulation (28), and that the connecting element (31) is articulated to the said arm (30).

19. Agricultural machine according to Claim 18, ***characterized in* that** the said connecting element (31) is a bar articulated to the said articulation device (12).

20. Agricultural machine according to Claim 18, ***characterized in* that** the said connecting element (31) is a jack articulated to the said articulation device (12) and that the said jack is articulated to the said arm (30) such that, in the said work position, a variation in length of the said jack brings about a translation of the said work element (5) following a direction substantially perpendicular to the direction of advance (A).

21. Agricultural machine according to Claim 18, ***characterized in* that** the said connecting element (31) is a jack articulated to the said support arm (29) and that the said jack is articulated to the said arm (30) such that, in the said work position, a variation in length of the said jack brings about a translation of the said work element (5) following a direction substantially perpendicular to the direction of advance (A).

22. Agricultural machine according to Claim 17, ***characterized in* that** the said connecting device (27) is a support arm formed by two bars able to slide one with respect to the other.

23. Agricultural machine according to any one of Claims 1 to 21, ***characterized in* that** a lifting jack (32) is articulated between the said articulation device (12) and each of the said work devices (3).

24. Agricultural machine according to any one of Claims 1 to 22, ***characterized in* that** a release jack (33) is articulated between the said articulation device (12) and each of the said work devices (3), and that each of the said work devices (3) in the said work position can pivot about a third articulation (34) having a substantially vertical axis.

25. Agricultural machine according to any one of Claims 1 to 23, ***characterized in* that** the said front part (10) is attached by means of a connection (35) to a hitching device (7) including an upper casing (36), a lower casing (37) and a hitching arch (38) connectable to the two bottom anchoring points (39) of the three-point hitching device (40) of the tractor (6), that the said connection (35) connects the said front part (10) to the said upper casing (36), that the said upper casing (36) and the said lower casing (37) are connected by a fourth articulation (41), the axis of which is substantially vertical, that the said lower casing (37) is connected to the said hitching arch (38) by a fifth articulation (42), the axis of which is substantially horizontal and perpendicular to the straight line connecting the said two bottom anchoring points (39).

26. Agricultural machine according to Claim 24, ***characterized in* that** the said lower casing (37) includes an input hitching element (43) designed to be hitched to the power take-off (44) of the tractor (6), that the said upper casing (36) includes two output hitching elements (45), that each of the said output hitching elements (45) is directed towards one, respectively the other, of the said work devices (3), that the said lower casing (37) and the said upper casing (36) contain meshing elements connecting mechanically the said input hitching element (43) to the said output hitching elements (45) such that the mechanical energy provided to the said input hitching element (43) is evenly distributed towards the said output hitching elements (45).

27. Agricultural machine according to Claim 25, ***characterized in* that** each work device (3) includes a gear casing (46) for the putting into motion of at least one of the said work elements (5), that the said gear casing (46) is connected to the said output hitching element (45) directed towards the said work device (3) via an articulated transmission element (47) which includes a telescopic shaft (48), the said articulated transmission element (47) being articulated to the said work device (3) such that the length of the said telescopic shaft (48) is substantially constant between the said work position and the said transport position.

28. Agricultural machine according to any one of Claims 1 to 27, ***characterized in* that** it is a mower.
